# EUROPEAN PATENT SPECIFICATION

(11) **EP 2 273 702 B1**
(45) Date of publication and mention of the grant of the patent: **01.02.2012**
(21) Application number: 09290524.9
(22) Date of filing: 30.06.2009
(51) Int. Cl.: H04B 10/148, H04J 14/02, H04L 25/14

(54) **Adaptive optical transmission equipment**
Adaptives optisches Übertragungsgerät
Équipement adaptatif de transmission optique

(43) Date of publication of application: 12.01.2011
(73) Proprietor: Alcatel Lucent, 75007 Paris (FR)
(72) Inventor: Charlet, Gabriel, 91190 Villiers Le Bacle (FR); Morea, Annalisa, 91400 Orsay (FR)
(74) Representative: Mouney, Jérôme

(56) References cited:
- US-A1- 2003 147 585
- DAVID F WELCH ED - HENRY KRESSEL: "100 GbE Parallel Transport" LASERS AND ELECTRO-OPTICS SOCIETY, 2007. LEOS 2007. THE 20TH ANNUAL ME ETING OF THE IEEE, IEEE, PI, 1 October 2007 (2007-10-01), pages 364-365, XP031160603 ISBN: 978-1-4244-0924-2
- SERGE MELLE ET AL: "Marlet drivers and implementation options for 100-GBE transport over the WAN" IEEE COMMUNICATIONS MAGAZINE, IEEE SERVICE CENTER, PISCATAWAY, US, vol. 45, no. 11, 1 November 2007 (2007-11-01), pages 18-24, XP011196613 ISSN: 0163-6804

## Description

### BACKGROUND OF THE INVENTION

The present invention relates to the field of optical networks and in particular to wavelength division multiplexing (WDM) networks.

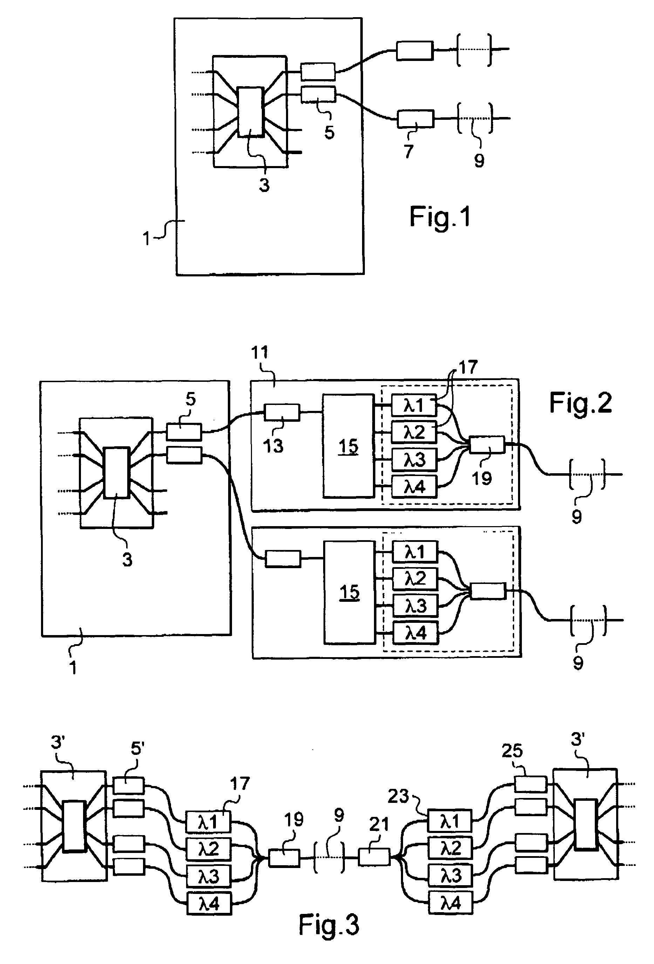

The development of the optical networks has allowed to achieve high capacity transmission over long distance. Nevertheless, the technology and equipments used have a high power consumption which requires a high and permanent amount of energy. Indeed, whatever the amount of traffic in an optical communication network, the power consumption remains high due to the activation of the laser sources and the electronic devices. Fig.1 represents an example of routing equipment 1 according to the state of the art, said routing equipment being implemented either in a cross connect a switch or a router. It comprises a switching matrix 3 for routing the received signals towards the requested destination. At the output of the switching matrix 3, interfaces 5 (having generally a bitrate of 10 or 40Gb/s) ensure the transmission of the signal toward an optical transmitter 7 (corresponding to an electronic to optical (E/O) conversion unit). The multiplexed signal being then transmitted to a Wavelength Division Multiplexing (WDM) line 9. In such configuration, the required amount of energy necessary for operating the network remains always identical whatever the amount of data transmitted. It is therefore necessary to find a solution to reduce said power consumption during off-peak hours, to save energy and thus to reduce the overall functioning cost set of the networks. Examples of equipments used in WDM networks are described in document US 2003/0147585.

### SUMMARY OF THE INVENTION

It is therefore an object of the present invention to overcome the above cited drawbacks of the state of the art and provide an allowing to reduce the power consumption.

Thus, the present invention refers to a method for transmitting high bitrate signals in an optical network comprising the steps of:
- receiving an electronic high bitrate signal comprising a variable amount of data,
- determining the amount of data in the high bitrate signal,
- distributing said amount of data among a predetermined number of lower bitrate signals, said predetermined number depending on the amount of data in the high bitrate signal,
- sending said predetermined number of lower bitrate signals to optical transmitters to convert them to optical signals,
- multiplexing said lower bitrate optical signals into a higher bitrate optical signal, wherein unused optical transmitters are deactivated.

According to another aspect of the invention, a high bitrate signal corresponds to a 40 Gb/s signal.

The present invention also refers to an optical transmission equipment comprising:
- an input interface for receiving a high bitrate input signal,
- determination means for determining an amount of data in the high bitrate input signal,
- a signal divider for dividing the high bitrate input signal into a plurality of lower bitrate signals, the number of lower bitrate signals being function of the amount of data in the high bitrate input signal,
- a plurality of optical transmitters wherein at least one of said plurality of optical transmitters comprise at least an active and a sleeping mode,
- control means for activating or deactivating optical transmitters in function of the amount of data in the high bitrate input signal.

According to another aspect of the invention, the signal divider comprises a serial-to-parallel framer having its input coupled to the input interface, its outputs coupled with the plurality of optical transmitters and comprising distribution means for distributing the received data among the active optical transmitters.

According to a further aspect of the invention, the signal divider comprises a switching matrix.

According to an additional aspect of the invention, the at least one optical transmitter comprises an intermediate mode between the active and the sleeping mode and wherein said intermediate mode is selected by the control means when the amount of data in the input signal corresponds to a predetermined threshold.

According to another aspect of the invention,said predetermined threshold corresponds to an amount of data lower than the maximum amount of data that the active optical transmitters can process.

According to a further aspect of the invention, said intermediate mode corresponds to a partial activation of the elements requiring a warm up delay to reach their working functioning.

According to an additional aspect of the invention, the wavelengths of the signals produced by the optical transmitters are different from each other and wherein said optical transmission equipment also comprises an optical multiplexer which multiplexes the signals coming from the optical transmitter into a multiplexed signal.

According to another aspect of the invention, the optical multiplexer is a wavelength division multiplexing (WDM) multiplexer.

According to a further aspect of the invention, the multiplexed signal has a bitrate at least equal to the sum of the bitrate of the signals needing to be multiplexed.

According to an additional aspect of the invention, the optical transmission equipment comprises a variable bitrate optical transponder coupled to the output of the multiplexer and the bitrate of said variable bitrate optical transponder is determined in function of the number of active optical transmitter.

According to a further aspect of the invention, in case of inactivity of an optical transmitter, bit padding is applied in the multiplexer to fill in the data stream corresponding to said optical transmitter.

According to an additional aspect of the invention, in case of failure of an active optical transmitter, another optical transmitter being not active is used in substitution.

The present invention also refers to an optical communication system comprising an optical transmission equipment and an optical reception equipment arranged for receiving said high bitrate signal, said optical reception equipment comprising:
- an optical demultiplexer for demultiplexing said received high bitrate signal,
- determination means for determining an amount of data in the received high bitrate signal,
- a plurality of optical receivers wherein at least one of said plurality of optical receivers comprises at least an active and a sleeping mode,
- control means for activating or deactivating optical receivers in function of the amount of data in the received high bitrate signal.

### BRIEF DESCRIPTION OF THE DRAWINGS

FIG.1 is a diagram representing optical signals transmission equipment according to the state of the art;
FIG.2 is a diagram representing optical signals transmission equipment according to an embodiment of the present invention;
FIG.3 is a diagram representing optical signals transmission equipment according to another embodiment of the present invention;
FIG.4 is a diagram representing a part of a network comprising optical signals transmission equipment according to an embodiment of the present invention;
FIG.5 is a graph representing the energy consumption of a transmission device in function of its functioning mode;
FIG.6 is a diagram representing the evolution of energy consumption with the traffic requirement along the time;

### DETAILED DESCRIPTION OF THE INVENTION

As used herein, the term "Gb/s" refers to the unit gigabit per second ;

As used herein, the term "WDM" refers to the acronym Wavelength Division Multiplexing;

As used herein, the term "deactivated" refers to a state which requires less energy than the working activated state such as a switched off mode, a sleeping mode or a partial activated mode;

As used herein, the term "partial activation" of an equipment or device refers to an activation of only a part of the functions of said equipment and/or to an activated state requiring the minimum of energy (low power state);

High bitrate optical transmitters require a high number of laser sources (corresponding to each wavelength signal) and therefore a high level of energy.

Besides, the amount of data transmitted in an optical network varies with time such that peak hours requiring the maximum transmission capacity alternate with off peak hours when only a fraction of the transmission capacity is necessary.

Thus, embodiments of the present invention refer to a configuration of the optical transmitters allowing to save energy during off peak hours. Said configuration refers to the use of a plurality of sub-transmitters producing reduced bitrate signals and the multiplexing of said reduced bitrate signals in a high bitrate signal. Thus, in case of low data traffic, only a portion of sub-transmitters are used, the others being deactivated in order to save energy.

Figure 2 represents an embodiment of the present invention using existing routing equipments 1 (a cross-connect or a switch or a router) such as the one described in Figure 1 which provides a high bitrate signal (for example a 40 Gb/s signal, nevertheless it has to be noted that the same method may be applied on other high bitrate signals (10 Gb/s or 100 Gb/s for example) at the output of the interface 5. A transport equipment 11 is coupled to the output of the interface 5. Said transport equipment 11 comprises a high bitrate very short reach (VSR) interface 13 which is linked to a framer 15. Said framer 15 allows to divide a high bitrate signal (for example a 40 Gb/s signal) into a plurality of lower bitrate signals (for example four signals of 10 Gb/s (accordingly with a high bitrate signal of 10 Gb/s, lower bitrate signals would be 4*2.5 Gb/s and with a high bitrate signal of 100 Gb/s, lower bitrate signals would be 10*10 Gb/s or 4*25 Gb/s for example). Moreover, the division is achieved in function of the amount of data in the high bitrate signal. Indeed, if the amount of data is 40 Gb (which corresponds to the maximum in the present example), said data will be distributed among the four 10Gb/s bitrate signals whereas if the amount of data is only 20 Gb, said data will be distributed among only two 10 Gb/s bitrate signals. Thus, said framer 15 comprises determination means allowing determining the amount of data in the signal received at its input. Besides, it has to be noted that the framer equipment 15 also comprises an aggregation circuit and a forward error correction (FEC) coding device. The different lower bitrate signals (10 Gb/s signals in the present example) are then transmitted to a plurality of optical transmitters 17 also called transponders. Each optical transmitter corresponds to a part of the operating wavelength spectrum (λ1, λ2, λ3...). The optical signals are then multiplexed in an optical multiplexer 19 before being transmitted to a WDM transmission line 9.

During off-peak hours only a fraction of the optical transmitters is used. According to the present embodiment, the other optical transmitters are then deactivated enabling thus to save energy. Furthermore, it has to be noted that the corresponding receivers of the egress node are also deactivated.

Indeed, as each lower bitrate optical transmitter 17 covers only a portion of the operating wavelength spectrum, it requires a reduced number of transmission equipments (laser sources, framers, Forward Error Correction (FEC) coding equipments, modulator drivers...) and therefore less energy than a high bitrate optical transmitter.

Thus, the number of activated optical transmitters varies in function of the amount of data needing to be transmitted and the signals distribution among the optical transmitters 17 is achieved such that signals are sent in priority to a first transmitter 17. When the capacity limit of said first transmitter is reached, signals are sent to a second optical transmitter 17 and so on such that a minimum number of transmitters is used at a time.

According to another embodiment presented in figure 3, routing equipments 1 are modified in order to provide directly low bitrate (10Gb/s for example) signals at the output of the interface 5'. Then, the output of the interface 5' is coupled to a low bitrate optical transmitter 17. In this embodiment, signals coming from several outputs of the switching matrix (four in the present example) have a common destination or common egress node. However, depending on the amount of data needing to be transmitted to said egress node, the number of active optical transmitter 17 will vary. Moreover, as in the previous embodiment, the output of the low bitrate optical transmitter 17 is coupled to an optical multiplexer 19 in order to multiplex the low bitrate signal having a common destination into a high bitrate (40 Gb/s in the present example) signal, said high bitrate signal being then transmitted to a WDM transmission line 9.

In this embodiment, equipments at the reception of the signal are modified accordingly. Indeed, the received signal is demultiplexed in an optical demultiplexer 21. The low bitrate signals (four in the present example) are then transmitted to low bitrate optical receivers 23, the number of activated receivers corresponding to the number of activated transmitters. In said receivers 23, optical signals are converted to electronic signals and then sent to low bitrate (10 Gb/s in the present example) interfaces 25 in order to be routed by a switching matrix 3'.

Unlike the previous embodiment, this embodiment requires a modification of the existing routing equipments 1. Nevertheless, such embodiment is advantageous as it requires less signal modifications. Indeed, signals coming from the switching matrix are already at the desired bitrate.

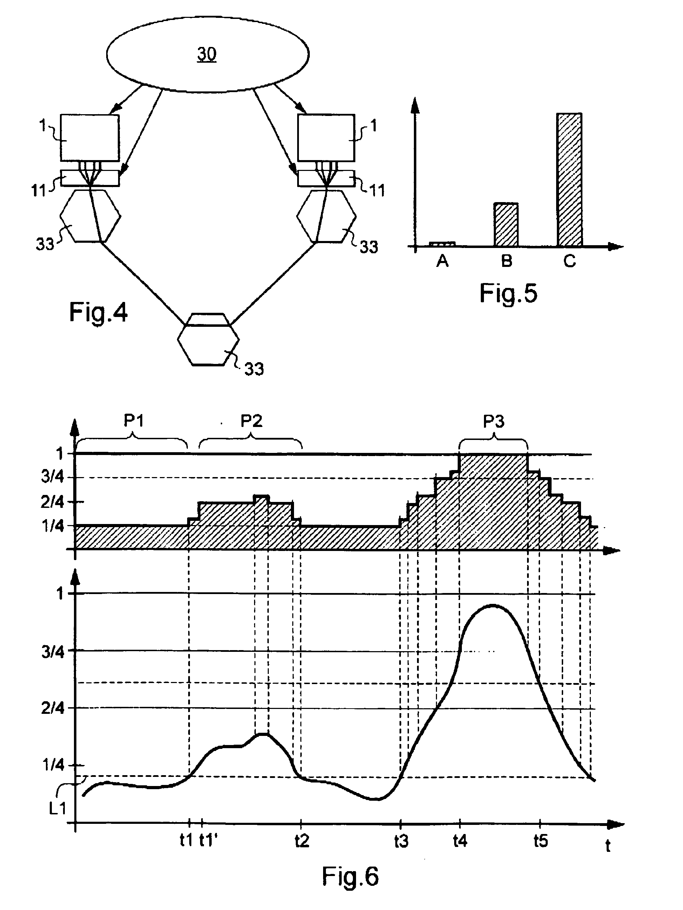

Besides, the embodiments of the present invention are not limited to point to point connections and signals can be transmitted transparently through optical cross-connect as depicted in figure 4 which represents a portion of an optical network. A network management unit 30 manages the different equipments of the network such as the routing equipments 1 or the transport equipments 11. Optical signals are created as described in the previous embodiments and are then transmitted transparently through the WDM transmission lines 9 of the network. Routing of the optical signals being achieved by optical cross-connects also called Reconfigurable Optical Add and Drop Multiplexer (ROADM) 33.

Furthermore, as the amount of data transmitted at the output of the optical multiplexer 19 is variable, different transmission configuration can be implemented. According to an aspect of the present invention, a variable bitrate transponder is used so that the transmitted signal bitrate will vary along the time in function of the amount of data needing to be sent. Nevertheless, with such configuration, a clock information corresponding to the bitrate of the transmitted signal needs to be sent to the egress node in order for the receiver to set a proper clock recovery to allow demultiplexing at reception.

According to another aspect, bit padding is achieved to replace signals corresponding to the deactivated optical transmitters 17. Thus, whatever the amount of activated transmitters 17, the bitrate of the transmitted signal is always the same (40 Gb/s in the present example).

Concerning the activation and the deactivation of the optical transmitters 17, the activation may require more time than the deactivation due to the warm up time of some devices such as laser sources. This could be an issue as it could lead to a delay in the signal transmission. In order to overcome this issue, an aspect of the present invention is the use of optical transmitters having an intermediate mode corresponding to an half activated mode. Said half activated mode corresponds to the switching on of the equipments requiring to warm up before activation. As a consequence, when the amount of data gets close to the capacity limit of the last activated optical transmitter 17, the intermediate mode of the next optical transmitter 17 is triggered in order to allow an almost instantaneous activation when the capacity limit of the previous optical transmitter 17 will be reached. In the same way, a threshold can be determined that corresponds to a switching from the activated mode to the intermediate mode when data traffic decreases. Moreover, an intermediate mode can also be implemented on the devices of the receivers requiring a warm up delay.

Fig.5 shows a graph representing a possible ratio of power consumption between the different modes: deactivated mode corresponding to a sleeping mode(A), intermediate mode(B) and the activated mode(C). Nevertheless, this ratio may vary in function of the technology used.

According to the embodiments of the present invention, the power consumption of the transport equipment 11 varies in function of the traffic requirement corresponding to the amount of data needing to be transmitted. Fig.6 represents the evolution of the power consumption (upper graph) and the traffic requirement (lower graph) along the time t in the case of a transport equipment comprising four optical transmitters. The value 1 corresponding to the maximum possible traffic transmission on the lower graph and to the activation of the four optical transmitters in the upper graph. A first period P1 between time t0 and t1 corresponds to an off-peak hour period when only one optical transmitter is activated. At time t1, the traffic level reach a threshold which trigger the intermediate mode of the second optical amplifier. Then at time t1', said second amplifier is activated until time t2 corresponding to the period P2. After t2, the traffic is low again so that only one optical amplifier remains active. From time t3, the traffic is raising up so that the different transmitters are successively activated. From time t4, the traffic is high and all four optical transmitters are activated. Period P3 corresponds to a peak hour period when the traffic and power consumption are maximum. Thus, on the upper graph of fig.6, one can observe that the power consumption varies in function of the traffic level such that high consumption only occurs during peak hours. The embodiments of the present invention therefore allow saving energy when traffic is reduced by deactivating a part of the equipments.

Thus, by using a plurality of lower bitrate optical transmitters and receivers instead of one high bitrate optical transmitter and one high bitrate receiver and by adjusting the activation of said optical transmitters and receivers in function of the amount of data traffic, the embodiments of the present invention allow adapting power consumption to the traffic requirements and therefore saving energy and reducing functioning costs of the network.

## Claims

1. Method for transmitting high bitrate signals in an optical network comprising the steps of:
- receiving an electronic high bitrate signal comprising a variable amount of data,
- **characterized by** determining the amount of data in the high bitrate signal,
- distributing said amount of data among a predetermined number of lower bitrate signals, the said predetermined number depending on the amount of data in the high bitrate signal,
- sending the said predetermined number of lower bitrate signals to optical transmitters (17) to convert them to optical signals,
- multiplexing said lower bitrate optical signals into a higher bitrate optical signal, wherein unused optical transmitters (17) are deactivated.

2. Method for transmitting high bitrate signals in an optical network in accordance with claim 1 where a high bitrate signal corresponds to a 40 Gb/s signal.

3. Optical transmission equipment comprising:
- an input interface (13) for receiving a high bitrate input signal,
**characterized in that** it also comprises:
- determination means for determining an amount of data in the high bitrate input signal,
- a signal divider for dividing the high bitrate input signal into a plurality of lower bitrate signals, the number of lower bitrate signals being function of the amount of data in the high bitrate input signal,
- a plurality of optical transmitters (17) wherein at least one of said plurality of optical transmitters comprise at least an active and a sleeping mode,
- control means for activating or deactivating optical transmitters in function of the amount of data in the high bitrate input signal.

4. Optical transmission equipment in accordance with claim 3 wherein the signal divider comprises a serial-to-parallel framer (15) having its input coupled to the input interface, its outputs coupled with the plurality of optical transmitters and comprising distribution means for distributing the received data among the active optical transmitters.

5. Optical transmission equipment in accordance with claim 3 wherein the signal divider comprises a switching matrix (3).

6. Optical transmission equipment in accordance with one the claims 3 to 5 wherein the at least one optical transmitter (17) comprises an intermediate mode between the active and the sleeping mode and wherein said intermediate mode is selected by the control means when the amount of data in the input signal corresponds to a predetermined threshold.

7. Optical transmission equipment in accordance with claim 6 wherein said predetermined threshold corresponds to an amount of data lower than the maximum amount of data that the active optical transmitters can process.

8. Optical transmission equipment in accordance with claim 6 or 7 wherein said intermediate mode corresponds to a partial activation of the elements requiring a warm up delay to reach their working functioning.

9. Optical transmission equipment in accordance with one of the claims from 3 to 8 wherein the wavelengths of the signals produced by the optical transmitters (17) are different from each other and wherein said optical transmission equipment also comprises an optical multiplexer (19) which multiplexes the signals coming from the optical transmitter (17) into a multiplexed signal.

10. Optical transmission equipment in accordance with claim 9 wherein the optical multiplexer (19) is a wavelength division multiplexing (WDM) multiplexer.

11. Optical transmission equipment in accordance with claim 9 or 10 wherein the multiplexed signal has a bitrate at least equal to the sum of the bitrate of the signals needing to be multiplexed.

12. Optical transmission equipment in accordance with one of the claims from 9 to 11 1 wherein it comprises a variable bitrate optical transponder coupled to the output of the multiplexer (19) and wherein the bitrate of said variable bitrate optical transponder is determined in function of the number of active optical transmitter.

13. Optical transmission equipment in accordance with one of the claims from 9 to 11 1 wherein, in case of inactivity of an optical transmitter, bit padding is applied in the multiplexer (19) to fill in the data stream corresponding to said optical transmitter (17).

14. Optical transmission equipment in accordance with one of the claims from 3 to 13 wherein in case of failure of an active optical transmitter, another optical transmitter (17) being not active is used in substitution.

15. Optical communication system **characterized in that** it comprises an optical transmission equipment in accordance with one of the claims from 3 to 14 and an optical reception equipment arranged for receiving an optical high bitrate signal sent by the said optical transmission equipment, the said optical reception equipment comprising:
- an optical demultiplexer (21) for demultiplexing the said received optical high bitrate signal,
- determination means for determining an amount of data in the said received optical high bitrate signal,
- a plurality of optical receivers (23) wherein at least one of the said plurality of optical receivers comprises at least an active and a sleeping mode,
- control means for activating or deactivating optical receivers in function of the amount of data in the said received optical high bitrate signal.

## Patentansprüche

1. Verfahren zum Übertragen von Signalen mit hoher Bitrate in einem optischen Netzwerk, die folgenden Schritte umfassend:
- Empfangen eines elektronischen Signals mit hoher Bitrate, welches eine variable Datenmenge enthält,
**gekennzeichnet durch**:
- Ermitteln der Datenmenge in dem Signal mit hoher Bitrate,
- Verteilen der besagten Datenmenge auf eine vorbestimmte Anzahl von Signalen mit niedrigerer Bitrate, wobei die besagte vorbestimmte Anzahl von der Datenmenge in dem Signal mit hoher Bitrate abhängt,
- Senden der besagten vorbestimmten Anzahl von Signalen mit niedrigerer Bitrate an optische Sender (17), um diese in optische Signale umzuwandeln,
- Multiplexen der besagten optischen Signale mit niedrigerer Bitrate in optische Signale mit höherer Bitrate, wobei unbenutzte optische Sender (17) deaktiviert werden.

2. Verfahren zum Übertragen von Signalen mit hoher Bitrate in einem optischen Netzwerk nach Anspruch 1, wobei ein Signal mit hoher Bitrate einem 40 Gb/s-Signal entspricht.

3. Optische Übertragungseinrichtung, umfassend:
- Eine Eingangsschnittstelle (13) für den Empfang eines Eingangssignals mit hoher Bitrate,
**dadurch gekennzeichnet, dass** sie weiterhin umfasst:
- Ermittlungsmittel zum Ermitteln einer Datenmenge in dem Eingangssignal mit hoher Bitrate,
- einen Signalteiler zum Teilen des Eingangssignal mit hoher Bitrate in eine Mehrzahl von Signalen mit niedrigerer Bitrate, wobei die Anzahl der Signale mit niedrigerer Bitrate von der Datenmenge in dem Eingangssignal mit hoher Bitrate abhängt,
- eine Mehrzahl von optischen Sendern (17), wobei mindestens einer der besagten Mehrzahl von optischen Sendern mindestens einen aktiven Modus und einen Ruhemodus aufweist,
- Steuermittel zum Aktivieren oder Deaktivieren von optischen Sendern in Abhängigkeit von der Datenmenge in dem Eingangssignal mit hoher Bitrate.

4. Optische Übertragungseinrichtung nach Anspruch 3, wobei der Signalteiler einen Seriell-zu-Parallel-Framer (15) umfasst, dessen Eingang an die Eingangsschnittstelle gekoppelt ist und dessen Ausgänge mit der Mehrzahl von optischen Sendern gekoppelt sind, und Verteilungsmittel zum Verteilen der empfangenen Daten auf die aktiven optischen Sender umfasst.

5. Optische Übertragungseinrichtung nach Anspruch 3, wobei der Signalteiler eine Schaltmatrix (3) umfasst.

6. Optische Übertragungseinrichtung nach einem der Ansprüche 3 bis 5, wobei der mindestens eine optische Sender (17) einen Zwischenzustand zwischen dem aktiven Modus und dem Ruhemodus aufweist, und wobei die Steuermittel den besagten Zwischenzustand auswählen, wenn die Datenmenge in dem Eingangssignal einem vorbestimmten Grenzwert entspricht.

7. Optische Übertragungseinrichtung nach Anspruch 6, wobei der besagte vorbestimmte Grenzwert einer Datenmenge entspricht, welche niedriger ist als die maximale Datenmenge, die von den aktiven optischen Sendern verarbeitet werden kann.

8. Optische Übertragungseinrichtung nach Anspruch 6 oder 7, wobei der besagte Zwischenmodus einer Teilaktivierung der Elemente, die eine Anlaufzeit erfordern, um ihren Betriebsfähigkeit zu erreichen, entspricht.

9. Optische Übertragungseinrichtung nach einem der Ansprüche 3 bis 8, wobei sich die Wellenlängen der von den optischen Sendern (17) erzeugten Signale voneinander unterscheiden, und wobei die besagte optische Übertragungseinrichtung ebenfalls einen optischen Multiplexer (19) umfasst, welcher die von dem optischen Sender (17) kommenden Signale in gemultiplexte Signale multiplext.

10. Optische Übertragungseinrichtung nach Anspruch 9, wobei der optische Multiplexer (19) ein Wellenlängenmultiplexer (WDM) ist.

11. Optische Übertragungseinrichtung nach Anspruch 9 oder 10, wobei die Bitrate des gemultiplexten Signals mindestens der Summe der Bitraten der zu multiplexenden Signale entspricht.

12. Optische Übertragungseinrichtung nach einem der Ansprüche 9 bis 11, wobei diese einen an den Ausgang des Multiplexers (19) gekoppelten optischen Transponder mit variabler Bitrate umfasst, und wobei die Bitrate des besagten optischen Transponders mit variabler Bitrate in Abhängigkeit von der Anzahl von aktiven optischen Sendern bestimmt wird.

13. Optische Übertragungseinrichtung nach einem der Ansprüche 9 bis 11, wobei, wenn ein optischer Sender nicht aktiv ist, ein Bit-Padding im Multiplexer (19) vorgenommen wird, um den dem besagten optischen Sender (17) entsprechenden Datenstrom aufzufüllen.

14. Optische Übertragungseinrichtung nach einem der Ansprüche 3 bis 13, wobei, wenn ein aktiver optischer Sender ausfällt, ein anderer optischer Sender (17), der nicht aktiv ist, als Ersatz verwendet wird.

15. Optisches Kommunikationssystem, **dadurch gekennzeichnet, dass** es eine optische Übertragungseinrichtung gemäß einem der Ansprüche 3 bis 14 und eine optische Empfangseinrichtung, welche für den Empfang eines von der besagten optischen Übertragungseinrichtung gesendeten optischen Signals mit hoher Bitrate ausgelegt ist, umfasst, wobei die besagte optische Empfangseinrichtung umfasst:
- Einen optischen Demultiplexer (21) zum Demultiplexen des besagten empfangenen Signals mit hoher Bitrate,
- Ermittlungsmittel zum Ermitteln einer Datenmenge in dem besagten empfangenen optischen Signal mit hoher Bitrate,
- eine Mehrzahl von optischen Empfängern (23), wobei mindestens einer der besagten Mehrzahl von optischen Empfängern mindestens einen aktiven Modus und einen Ruhemodus aufweist,
- Steuermittel zum Aktivieren oder Deaktivieren von optischen Empfängern in Abhängigkeit von der Datenmenge in dem besagten empfangenen optischen Signal mit hoher Bitrate.

## Revendications

1. Procédé de transmission de signaux à haut débit dans un réseau optique, comprenant les étapes suivantes :
- réception d'un signal électronique à haut débit comprenant une quantité variable de données,
**caractérisé par** :
- la détermination de la quantité de données dans le signal à haut débit,
- répartition de ladite quantité de données parmi un nombre prédéterminé de signaux à débit plus faible, ledit nombre prédéterminé dépendant de la quantité de données dans le signal à haut débit,
- envoi dudit nombre prédéterminé de signaux à débit plus faible à des émetteurs optiques (17) pour les convertir en signaux optiques,
- multiplexage desdits signaux optiques à débit plus faible en un signal optique à débit élevé, dans lequel les émetteurs optiques non utilisés (17) sont désactivés.

2. Procédé de transmission de signaux à haut débit dans un réseau optique selon la revendication 1, dans lequel un signal à haut débit correspond à un signal à 40 Gb/s.

3. Équipement de transmission optique, comprenant :
- une interface d'entrée (13) pour recevoir un signal d'entrée à haut débit,
**caractérisé en ce qu'**il comprend en outre :
- des moyens de détermination pour déterminer une quantité de données dans le signal d'entrée à haut débit,
- un diviseur de signal pour diviser le signal d'entrée à haut débit en une pluralité de signaux à débit plus faible, le nombre de signaux à débit plus faible dépendant de la quantité de données dans le signal d'entrée à haut débit,
- une pluralité d'émetteurs optiques (17), dans lequel au moins l'un de ladite pluralité d'émetteurs optiques comprend au moins un mode actif et un mode repos,
- des moyens de commande pour activer ou désactiver les émetteurs optiques en fonction de la quantité de données dans le signal d'entrée à haut débit.

4. Équipement de transmission optique selon la revendication 3, dans lequel le diviseur de signal comprend un trameur série-parallèle (15) dont l'entrée est couplée à l'interface d'entrée, dont les sorties sont couplées à la pluralité d'émetteurs optiques et comprenant des moyens de répartition pour distribuer les données reçues parmi les émetteurs optiques actifs.

5. Équipement de transmission optique selon la revendication 3, dans lequel le diviseur de signal comprend une matrice de commutation (3).

6. Équipement de transmission optique selon l'une des revendications 3 à 5, dans lequel l'au moins un émetteur optique (17) comprend un mode intermédiaire entre le mode actif et le mode repos et dans lequel ledit mode intermédiaire est sélectionné par les moyens de commande lorsque la quantité de données dans le signal d'entrée correspond à un seuil prédéterminé.

7. Équipement de transmission optique selon la revendication 6, dans lequel ledit seuil prédéterminé correspond à une quantité de données inférieure à la quantité de données maximale que peuvent traiter les émetteurs optiques actifs.

8. Équipement de transmission optique selon la revendication 6 ou 7, dans lequel ledit mode intermédiaire correspond à une activation partielle des éléments nécessitant un délai de réchauffement pour atteindre leur fonctionnement de service.

9. Équipement de transmission optique selon l'une des revendications 3 à 8, dans lequel les longueurs d'onde des signaux produits par les émetteurs optiques (17) sont différentes les unes des autres et dans lequel ledit équipement de transmission optique comprend également un multiplexeur optique (19) qui multiplexe les signaux provenant de l'émetteur optique (17) en un signal multiplexé.

10. Équipement de transmission optique selon la revendication 9, dans lequel le multiplexeur optique (19) est un multiplexeur par répartition en longueur d'onde (WDM).

11. Équipement de transmission optique selon la revendication 9 ou 10, dans lequel le signal multiplexé a un débit au moins égal à la somme des débits des signaux devant être multiplexés.

12. Équipement de transmission optique selon l'une des revendications 9 à 11, comprenant un transpondeur optique à débit variable couplé à la sortie du multiplexeur (19) et dans lequel le débit dudit transpondeur optique à débit variable est déterminé en fonction du nombre d'émetteurs optiques actifs.

13. Équipement de transmission optique selon l'une des revendications 9 à 11, dans lequel, en cas d'inactivité d'un émetteur optique, un remplissage de bits est appliqué dans le multiplexeur (19) pour remplir le flux de données correspondant audit émetteur optique (17).

14. Équipement de transmission optique selon l'une des revendications 3 à 13, dans lequel, en cas de défaillance d'un émetteur optique actif, un autre émetteur optique (17) non actif est utilisé en remplacement.

15. Système de communication optique, **caractérisé en ce qu'**il comprend un équipement de transmission optique selon l'une des revendications 3 à 14 et un équipement de réception optique agencé pour recevoir un signal optique à haut débit envoyé par ledit équipement de transmission optique, ledit équipement de réception optique comprenant :
- un démultiplexeur optique (21) pour démultiplexer ledit signal optique à haut débit reçu,
- des moyens de détermination pour déterminer une quantité de données dans ledit signal optique à haut débit reçu,
- une pluralité de récepteurs optiques (23), dans lequel au moins l'un de ladite pluralité de récepteurs optiques comprend au moins un mode actif et un mode repos,
- des moyens de commande pour activer ou désactiver les récepteurs optiques en fonction de la quantité de données dans le signal optique à haut débit reçu.
